# FASCICULE DE BREVET EUROPEEN

(11) **EP 2 794 504 B1**
(45) Date de publication et mention de la délivrance du brevet: **10.02.2016**
(21) Numéro de dépôt: 12812629.9
(22) Date de dépôt: 20.12.2012
(51) Int. Cl.: C04B 14/00, G21F 9/30, C04B 103/00, C04B 111/00, C04B 28/02, C04B 28/08, C04B 14/06

(54) **CONDITIONNEMENT D'UN DÉCHET RADIOACTIF PAR CIMENTATION**
VERPACKUNG VON RADIOAKTIVEN ABFÄLLEN DURCH ZEMENTIERUNG
PACKAGING OF RADIOACTIVE WASTE BY CEMENTING

(30) Priorité: 22.12.2011 FR 1162288
(43) Date de publication de la demande: 29.10.2014
(73) Titulaire: AREVA NC, 92400 Courbevoie (FR)
(72) Inventeur: AVRIL, Damien, F-50100 Cherbourg-Octeville (FR); CHARTIER, David, F-30130 Pont-Saint-Esprit (FR); SANCHEZ-CANET, Jennifer, F-30130 Pont-Saint-Esprit (FR)
(74) Mandataire: Ahner, Philippe
(86) Numéro de dépôt international: PCT/EP2012/076388
(87) Numéro de publication internationale: WO 2013/092866

(56) Documents cités:
- JP-A- 63 243 798
- DUNZIK GOUGAR M L ET AL: "A NOVEL WATE FORM FOR DISPOSAL OF SPENT-NUCLEAR-FUEL REPROCESSING WASTE: A VITRIFIABLE CEMENT", NUCLEAR TECHNOLOGY, AMERICAN NUCLEAR SOCIETY, CHICAGO, IL, US, vol. 125, no. 1, 1 janvier 1999 (1999-01-01), pages 93-103, XP000800848, ISSN: 0029-5450
- Sandor Popovics: "Concrete Materials", 1992, Noyes Publications, XP002680331, ISBN: 0815513089 page page 221, page 221
- US Silica: "Datasheet Min-U-Sil 30", , 10 septembre 2007 (2007-09-10), XP002680332, Extrait de l'Internet: URL:http://www.ussilica.com/uploads/files/ product-data-sheets/industry/building-prod ucts/MINUSIL30-Pacific.pdf [extrait le 2012-07-19]
- SHARP ET AL.: "Cementitious Systems for Encapsulation of Intermediate Waste", PROCEEDINGS OF ICEM 03, 25 septembre 2003 (2003-09-25), pages 1-10, XP002680333, Extrait de l'Internet: URL:http://isl.group.shef.ac.uk/papers/NBM ICEM03paper.pdf [extrait le 2012-07-19]

## Description

### DOMAINE TECHNIQUE

L'invention se rapporte au domaine du conditionnement des déchets radioactifs par cimentation.

De manière plus spécifique, l'invention se rapporte à l'utilisation d'une silice cristalline, en mélange avec une poudre de ciment, pour diminuer l'échauffement de la pâte cimentaire résultant de l'hydratation de cette poudre, au cours d'un processus de conditionnement d'un déchet radioactif.

L'invention se rapporte également à une formulation pour le conditionnement d'un déchet radioactif par cimentation, qui comprend une telle silice.

Elle se rapporte encore à un procédé de conditionnement d'un déchet radioactif mettant en oeuvre cette formulation, ainsi qu'à un colis de conditionnement d'un déchet radioactif qui est obtenu par ce procédé.

L'invention trouve notamment application dans le traitement de déchets produits dans l'aval du cycle du combustible nucléaire et, en particulier, de déchets de faible et moyenne activité tels que :
- les résines échangeuses d'ions (ou REI) utilisées pour le traitement d'effluents ou l'épuration des eaux des piscines de déchargement, de refroidissement ou d'entreposage des assemblages de combustibles nucléaires irradiés ;
- les fines de cisaillage ;
- les fines de dissolution issues du traitement de ces assemblages.

### ÉTAT DE LA TECHNIQUE ANTÉRIEURE

Depuis de nombreuses années, les déchets radioactifs sont conditionnés sous forme de colis, dans lesquels ils sont retenus dans des enveloppes de matériau successives, celles-ci empêchant la dispersion de ces espèces radioactives dans l'environnement.

Ainsi, le transport, l'entreposage et le stockage de ces colis sont facilités et peuvent être effectués en toute sécurité, tout en assurant la protection des opérateurs vis-à-vis des rayonnements émis par ces déchets.

Parmi les déchets radioactifs faisant l'objet d'un conditionnement, on trouve notamment les REI, les fines de cisaillage et les fines de dissolution.

Les REI se présentent chimiquement sous la forme de polymères fonctionnalisés de manière différente selon l'affinité de ces résines. Cette fonctionnalisation fait intervenir un squelette polystyrénique réticulé par du vinylbenzène muni de groupements fonctionnels, de type sulfonique pour les résines cationiques, et de type ammonium quaternaire en ce qui concerne les résines anioniques. L'irradiation de ces résines est responsable de l'altération partielle de ces édifices moléculaires.

La cimentation est un procédé communément retenu pour le conditionnement de REI ou d'un déchet comprenant des REI.

Celle-ci consiste à réaliser une structure solide, ou « enrobé », par durcissement d'une formulation comprenant le déchet et une matrice cimentaire destinée à envelopper celui-ci. Ensuite, un colis de conditionnement, qui est constitué après scellement d'un fût dans lequel cet enrobé est réalisé, peut être entreposé et/ou stocké.

Toutefois, plusieurs facteurs contribuent à la dégradation progressive de l'enrobé.

Ainsi, la formulation comprenant le déchet et la matrice cimentaire peut se raidir, par exemple pendant le malaxage de cette formulation, au fur et à mesure de l'augmentation de la quantité de résines destinée à y être incorporée.

Une fois l'enrobé constitué, des variations importantes de température et d'humidité peuvent aussi entraîner une expansion de l'enrobé, voire sa fissuration. En outre, la résistance mécanique de celui-ci diminue au fur et à mesure de l'augmentation du taux d'incorporation de REI dans la matrice cimentaire.

Enfin, les résines elles-mêmes, de par la nature des radionucléides qu'elles renferment, possèdent une réactivité chimique suffisamment importante pour contribuer à cette dégradation.

La perspective de la gestion à long terme des déchets radioactifs a rendu nécessaire le développement de techniques visant à améliorer la résistance de la matrice cimentaire, et, partant, le niveau de protection conféré par les colis de conditionnement au cours du temps.

On connaît un certain nombre de techniques visant à réduire la dégradation d'une matrice cimentaire dédiée au conditionnement de REI, et à pallier la fragilité des enrobés qui est impliquée par cette dégradation. Ces techniques se focalisent sur le rôle délétère des résines sur la matrice cimentaire.

Ainsi, par exemple, la demande de brevet EP 0 319 398 [1] propose de mélanger un déchet radioactif contenant des REI riches en ions borate, en présence d'eau, avec du ciment alumineux, du ciment non alumineux et éventuellement un composé siliceux et/ou un composé contenant du bore, en proportions telles que l'on forme un mélange constituant, autour du déchet, une matrice solide comportant une phase minérale stable du type straetlingite. Il est expliqué que ce mélange permet d'éviter les interactions chimiques néfastes entre ce déchet et le ciment ou l'eau.

Le brevet US 4,904,416 **[2]**, qui vise à résoudre un problème technique sensiblement identique, propose d'éliminer l'eau libre des REI, puis à mélanger les résines sèches ainsi obtenues avec une petite quantité de ciment. Il y est expliqué que la poudre de ciment réagit avec l'eau qui adhère à la surface des particules de résine ou qui est contenue dans ces particules. En outre, l'hydratation du ciment, qui en résulte, conduit à une couverture progressive de ces dernières par la pâte cimentaire ainsi formée. Ce prétraitement permet d'éviter que ne se produisent les mécanismes à l'origine de l'expansion de l'enrobé lors de son immersion dans l'eau, et, partant, d'augmenter la teneur en REI de l'enrobé.

À une échelle industrielle, un autre procédé de conditionnement d'un déchet comprenant des REI par cimentation est actuellement mis en oeuvre, en particulier dans l'usine de traitement des combustibles nucléaires usés de La Hague (France). Ce procédé, dit « procédé ACR », permet la réalisation de colis de conditionnement d'un volume de 400 litres.

Afin d'atténuer la réactivité des REI, ce procédé, fait également intervenir un prétraitement chimique de ces dernières, mais par une solution aqueuse de chaux éteinte Ca(OH)₂ et de nitrate de calcium tétrahydraté Ca(NO₃)₂·4H₂O propres à saturer les sites anioniques et cationiques des résines. En outre, l'action de la chaux éteinte permet de neutraliser les protons libérés par échange d'ions avec les REI.

Ensuite, le durcissement d'une formulation comprenant entres autres le déchet, de l'eau, la chaux éteinte, le nitrate de calcium tétrahydraté et de la poudre de ciment permet la constitution d'un enrobé.

Toutefois, il existe une nécessité de traitement de la solution de prétraitement après son utilisation, celle-ci pouvant se révéler difficile notamment à cause du volume de solution engagé.

En outre, la formulation mise en oeuvre dans le procédé ACR a été optimisée pour le conditionnement d'un déchet par cimentation, sous la forme de colis d'un volume maximal de 400 litres. Cette formulation ne peut ainsi être utilisée telle quelle pour un volume de déchets significativement supérieur.

Les inventeurs se sont donc fixé pour but général de mettre au point un procédé de conception d'un colis de conditionnement de déchet radioactif, permettant de diminuer les risques de dégradation de la matrice cimentaire et, partant, de l'enrobé, que celle-ci soit initiée par les constituants du déchet et/ou de la matrice cimentaire.

Les inventeurs se sont également fixé pour but de mettre au point un colis permettant le conditionnement d'un volume de déchet supérieur à celui des colis obtenus par la mise en oeuvre de procédés actuellement existants.

Il se trouve que, dans le cadre de leurs travaux, les inventeurs ont constaté qu'un échauffement excessif de la pâte cimentaire, cette dernière étant obtenue lors de l'hydratation de la poudre de ciment et constituant la base de la matrice cimentaire, est susceptible, s'il n'est pas correctement maîtrisé, de conduire à la fissuration de cette matrice et, partant, à celle de l'enrobé.

En outre, les inventeurs ont constaté que cet échauffement peut être réduit par l'adjonction, à la pâte cimentaire, d'un oxyde de silicium sous une forme cristalline, se présentant sous la forme de particules présentant des caractéristiques granulométriques particulières.

Et c'est sur ces constatations que se fonde la présente invention.

### EXPOSÉ DE L'INVENTION

L'invention a donc, en premier lieu, pour objet l'utilisation d'un dioxyde de silicium, encore appelé « silice » ou désigné par sa formule chimique SiO₂, sous une forme cristalline, se présentant sous la forme de particules dont au moins 90% en nombre possèdent une taille moyenne de particules allant de 0,5 à 200 µm, en mélange avec une poudre de ciment, pour diminuer l'échauffement de la pâte cimentaire résultant de l'hydratation de cette poudre, au cours d'un processus de conditionnement d'un déchet radioactif par cimentation.

De manière préférentielle, au moins 90% en nombre des particules du dioxyde de silicium possèdent une taille moyenne de particules allant de 1 à 100 µm.

Cet effet de diminution de l'échauffement par recours à un tel composé chimique n'a jamais été décrit, à la connaissance des inventeurs, dans l'état de la technique. En outre, celui-ci confère à la matrice cimentaire enveloppant un déchet comportant des REI une stabilité très satisfaisante et, partant, un intérêt tout particulier dans le domaine du conditionnement des déchets radioactifs par cimentation.

Les inventeurs ont pu mettre en évidence un tel effet par une démarche associant les résultats d'essais calorimétriques réalisés de manière conforme à la norme NF P15-436, et ceux issus d'une modélisation thermique faisant suite à ces essais.

Par exemple, les proportions du dioxyde de silicium cristallin et de poudre de ciment dans le mélange représentent un paramètre de choix, notamment en termes de coût.

Ainsi, avantageusement, le dioxyde de silicium et la poudre de ciment sont présents, dans le mélange, en des proportions massiques respectives de (17 ± 3)% et (83 ± 3)% de la masse totale de ce mélange.

On connaît, par ailleurs, plusieurs formes cristallines de silice, selon la température et la pression de cristallisation de celles-ci.

Ainsi, par ordre de température de fusion croissante, les formes polymorphes de la silice sont la stishovite, le quartz (sous ses formes allotropiques α et β), la tridymite (sous ses formes allotropiques α, β et γ), la calcédoine et la cristobalite (sous ses formes allotropiques α et β). En particulier, le dioxyde de silicium est du quartz.

L'utilisation d'un dioxyde de silicium cristallin, se présentant préférentiellement sous une forme cristalline particulière, a permis la mise au point d'une formulation particulière, qui permet le conditionnement d'un déchet radioactif par cimentation.

L'invention a donc également pour objet une formulation pour le conditionnement d'un déchet radioactif par cimentation, qui comprend les composants suivants :
- (11,0 ± 3,3)% en masse sèche du déchet radioactif ;
- (35,5 ± 4,0)% en masse d'eau ;
- (44,0 ± 5,0)% en masse d'une poudre de ciment ; et
- (9,5 ± 3,1)% en masse d'un dioxyde de silicium sous une forme cristalline, se présentant sous la forme de particules dont au moins 90% en nombre possèdent une taille moyenne de particules comprise allant de 0,5 à 200 µm.

Conformément à l'invention, le déchet radioactif compris dans cette formulation est choisi parmi des résines échangeuses d'ions, des fines de cisaillage, des fines de dissolution et les mélanges de celles-ci.

Les REI, dont la structure moléculaire a été précédemment explicitée, peuvent être d'une ou de plusieurs sortes de résines, indépendamment du fait qu'elles soient anioniques et/ou cationiques.

En particulier, ces résines se présentent sous la forme d'une pluralité de particules dont au moins 90% en nombre possèdent une taille moyenne de particules allant de 5 à 130 µm.

La formulation selon l'invention comprend également de l'eau, qui, de manière préférée, est apportée par le déchet, notamment dans le cas où ce déchet comprend ou est constitué par des REI. En effet, ces dernières retiennent une certaine quantité d'eau dans le cadre de leur utilisation, par exemple, sur les installations nucléaires, au cours d'opérations de filtration de l'eau utilisée pour le refroidissement des assemblages de combustible nucléaire après leur irradiation en réacteur.

Toutefois, il est également possible que tout ou partie de l'eau comprise dans la formulation soit l'objet d'un apport extérieur.

Les fines de cisaillage, qui ont été présentées plus haut, sont des résidus métalliques générés lors des opérations de découpe ou de cisaillage des gaines de combustibles, ces opérations ayant pour objectif de libérer les matières nucléaires contenues dans les gaines, en vue de leur dissolution et de leur traitement ultérieur.

Ces fines de cisaillage comprennent généralement un métal tel qu'un alliage à base de zirconium, par exemple le zircaloy, ou un acier inoxydable.

En outre, ces résidus se présentent, de manière préférentielle, sous la forme d'une pluralité de particules dont au moins 90% en nombre possèdent une taille moyenne de particules supérieure ou égale à 45 µm.

Les fines de dissolution sont, quant à elles, des composés insolubles issus des opérations de dissolution du combustible, par exemple réalisées dans de l'acide nitrique.

La nature chimique de ces fines de dissolution est très diverse. Celles-ci peuvent par exemple être des précipités de produits de fission, des composés intermétalliques, ou encore des phases riches en plutonium.

Généralement, ces fines de dissolution comprennent un ou plusieurs éléments choisis parmi le molybdène, le palladium, le plutonium, le ruthénium, le technétium, le rhodium, l'argent et les mélanges de ceux-ci. On citera ainsi, parmi les espèces contenues dans les fines de dissolution comprenant du plutonium, l'oxyde de plutonium(IV), de formule PuO₂, ou encore des composés intermétalliques, par exemple ceux de formules UPuPd₃ et UPuRh₃.

D'autre part, les fines de dissolution se présentent, de manière préférentielle, sous la forme d'une pluralité de particules dont au moins 90% en nombre possèdent une taille moyenne de particules inférieure ou égale à 210 µm.

En complément, et de manière préférentielle, il est précisé que le déchet radioactif compris dans la formulation conforme à l'invention comprend une proportion massique majoritaire de REI.

Ainsi, de manière préférentielle, les proportions massiques de REI, lorsque celles-ci sont considérées sèches, de fines de cisaillage et de fines de dissolution au sein du déchet représentent respectivement (81,3 ± 1,5)%, (1,9 ± 1,5)% et (16,8 ± 1,5)% de la masse totale de ce déchet.

La formulation conforme à l'invention comprend également une poudre de ciment, ce dernier étant de préférence un ciment de haut fourneau, encore appelé ciment CEM III et, mieux encore, un ciment de haut fourneau de classe C, encore noté CEM III/C.

Un autre composant de cette formulation est un dioxyde de silicium sous une forme cristalline, se présentant sous la forme de particules dont au moins 90% en nombre possèdent une taille moyenne de particules allant de 0,5 à 200 µm.

Ici également, de manière avantageuse, le dioxyde de silicium est du quartz.

Par ailleurs, la formulation selon l'invention peut comprendre de plus un ou plusieurs adjuvants, tels que ceux classiquement utilisés dans la préparation de ciments.

En particulier, un de ces adjuvants peut être un agent fluidifiant, dont le volume ajouté dépend de la rhéologie de cette formulation. Ainsi, de manière préférentielle, l'agent fluidifiant ne représente pas plus de 5% en masse de la masse de la poudre de ciment.

De plus amples informations concernant cet agent fluidifiant sont apportées dans la suite de la description.

La réalisation de cette formulation est une étape préalable au conditionnement d'un déchet radioactif par cimentation.

L'invention a ainsi également pour objet un procédé de conditionnement d'un déchet radioactif par cimentation, qui comprend :
a) le malaxage, dans un contenant, des composants d'une formulation telle que définie ci-dessus jusqu'à l'obtention d'un mélange homogène ; et
b) le durcissement du mélange obtenu à l'étape a).

Dans le cas notamment où le déchet radioactif contient des REI, l'étape a) comprend de manière préférentielle :
a₁) le prétraitement du déchet radioactif par malaxage de ce déchet sous forme humide, avec une fraction de la poudre de ciment et une fraction du dioxyde de silicium ; et
a₂) le malaxage du déchet radioactif ainsi prétraité avec les fractions restantes de poudre de ciment et de dioxyde de silicium.

On désigne par l'expression « déchet sous forme humide », un déchet radioactif dont l'humidité provient soit de l'eau retenue par le déchet, soit de l'eau provenant d'un apport extérieur, soit des deux.

L'étape a₁) présente l'avantage d'utiliser, en tant que l'un des réactifs de prétraitement, un ciment, introduit sous la forme d'une poudre, le ciment étant également le constituant principal de la matrice cimentaire ayant pour but d'envelopper le déchet.

De préférence, et de la même manière que précisé plus haut, il est utilisé un ciment sous la forme d'une poudre, ce dernier étant de préférence un ciment de haut fourneau, encore appelé ciment CEM III et, mieux encore, un ciment de haut fourneau de classe C.

Le choix de l'utilisation de cette poudre de ciment dans le prétraitement permet ainsi de limiter la quantité des réactifs introduits lors de la mise en oeuvre du procédé selon l'invention.

Le principe du prétraitement consiste à saturer les sites anioniques et cationiques des REI par les ions libérés lors de l'hydratation de la poudre de ciment par l'eau retenue par ces dernières, ces ions étant principalement des ions calcium, potassium, sodium, sulfate et dihydrogénosilicate, de formules respectives Ca²⁺, K⁺, Na⁺, SO₄²⁻ et H₂SiO₄²⁻, dans le but de limiter les risques de dégradation de la matrice cimentaire destinée à envelopper le déchet.

L'autre réactif utilisé dans l'étape a₁) de prétraitement est un dioxyde de silicium sous forme cristalline, introduit sous la forme de particules dont au moins 90% en nombre possèdent une taille moyenne de particules allant de 0,5 à 200 µm.

En particulier, au moins 90% en nombre des particules du dioxyde de silicium sous forme cristalline possèdent une taille moyenne de particules allant de 1 à 100 µm.

Par ailleurs, le dioxyde de silicium est préférentiellement du quartz.

L'ajustement de paramètres tels que la durée du prétraitement peut être réalisé par un homme du métier. Cette durée doit notamment être suffisante pour permettre le retour à température ambiante de la formulation selon l'invention, lorsqu'un échauffement est généré par réaction acido-basique entre les ions libérés par les REI et ceux libérés par la poudre de ciment lors de son hydratation.

Il en est de même lorsqu'il s'agit de déterminer la fraction des composants de la formulation qui est engagée dans l'étape a₁) de prétraitement.

Cette fraction peut être faible, notamment pour des raisons d'ordre chimique, étant donné que la quantité importante d'ions libérés par l'hydratation d'une faible quantité de poudre de ciment est considérée comme suffisante pour la saturation des sites ioniques libres de ces résines.

En particulier, une fraction massique de (20 ± 5)% de la masse totale de poudre de ciment, et une fraction massique de (20 ± 5)% de la masse totale de dioxyde de silicium sont utilisées à l'étape a₁).

L'étape a) du procédé selon l'invention comprend également, de manière avantageuse, une étape a₂) de malaxage du déchet radioactif ainsi prétraité avec les fractions restantes de poudre de ciment et de dioxyde de silicium.

En fonction de la rhéologie du mélange obtenu à l'étape a₂) de ce procédé, la formulation comprend un ou plusieurs adjuvants, tels que ceux utilisés de manière classique dans la préparation de ciments, et ce ou ces adjuvants est (sont) ajouté(s) au mélange obtenu à l'étape a₂).

En particulier, un de ces adjuvants peut être un agent fluidifiant, dont le volume est également déterminé en fonction de la rhéologie précédemment citée.

Typiquement, les agents fluidifiants sont des compositions possédant des propriétés plastifiantes et réductrices d'eau. Ils ne modifient pas la teneur en eau du milieu dans lequel ils sont introduits et permettent, en outre, d'obtenir des pâtes cimentaires qui présentent une ouvrabilité et une résistance appréciables.

À titre d'exemple, on peut citer celui qui est commercialisé par la société BASF sous la référence commerciale Pozzolith™ 400 N.

Dans le cas où l'on recourt à l'addition d'un agent fluidifiant, celui-ci ne représente pas plus de 5% en masse de la masse de la poudre de ciment.

Avantageusement, le mélange obtenu à l'issue de l'étape a) possède un rapport massique de l'eau à la poudre de ciment valant (0,81 ± 0,10).

Le procédé selon l'invention comprend également une étape b) de durcissement du mélange obtenu à l'étape a).

Le durcissement de ce mélange, qui est encore appelé « enrobé », peut être effectué, par exemple, par entreposage de celui-ci à température ambiante dans un milieu dans lequel l'hygrométrie est contrôlée.

Par ailleurs, l'homogénéisation des différents constituants entrant dans la composition de l'enrobé, qui est effectuée tout au long des étapes a) et b) du procédé selon l'invention, constitue également un aspect important de la mise en oeuvre de ce dernier.

Cette homogénéisation doit être réalisée de manière efficace pour permettre, notamment, la remise en suspension de particules dont la taille moyenne ne dépasse pas le millimètre.

De tels dispositifs sont connus d'un homme du métier souhaitant mettre en oeuvre un tel procédé de conditionnement d'un déchet radioactif, par exemple un dispositif d'agitation mécanique comprenant un moteur, un axe d'entraînement central auquel est (sont) connectée(s) une ou plusieurs pales rotatives de géométrie variable.

De préférence, la ou les pales est (sont) conçue(s) en un matériau métallique hautement résistant, par exemple en acier noir, c'est-à-dire un acier passivé en surface par création d'une couche d'oxyde métallique, de couleur noire, lors de sa fabrication à chaud.

De préférence également, le procédé selon l'invention est un procédé à pale perdue, ceci signifiant encore que la ou les pales rotatives est (sont) désolidarisée(s) du dispositif d'agitation mécanique, à la fin de la mise en oeuvre de ce procédé, et reste(nt) solidaire(s) de l'enrobé, une fois celui-ci constitué.

D'autre part, pour des raisons évidentes de maniabilité limitée de l'enrobé assurant le confinement du déchet radioactif, le contenant dans lequel les étapes du procédé ont été réalisées sert également de fût de conditionnement du déchet radioactif.

La mise en oeuvre de ce procédé, qui fait intervenir une formulation telle qu'explicitée plus haut, permet la constitution d'une structure de conditionnement du déchet radioactif qui peut être utilisée pour l'entreposage de ce dernier.

Ainsi, l'invention a-t-elle enfin pour objet un colis de conditionnement d'un déchet radioactif, qui est obtenu par un procédé tel que défini précédemment.

En particulier, ce colis de conditionnement comprend un fût de conditionnement et un enrobé tel que défini précédemment.

Comme il vient d'être expliqué, ce fût de conditionnement est également, de manière préférentielle, le contenant dans lequel les étapes du procédé selon l'invention ont été réalisées. Ainsi, ce colis est obtenu par scellement hermétique du fût de conditionnement contenant l'enrobé.

En outre, le colis selon l'invention présente, de manière avantageuse, un volume supérieur à 500 litres et, mieux encore, de 1 000 à 1 200 litres, ce volume étant typiquement de 1100 litres.

On entend par « volume » du colis, le volume de remplissage maximal du fût utilisé pour le conditionnement du déchet radioactif, celui-ci ayant au préalable fait l'objet d'une cimentation par mise en oeuvre du procédé explicité précédemment.

Enfin, tout comme pour les pales rotatives qui ont été présentées plus haut, le fût est le plus souvent conçu en un matériau métallique hautement résistant, par exemple en acier noir.

L'invention présente de nombreux avantages.

En effet, elle permet de réaliser un colis de conditionnement d'un déchet radioactif durable dans le temps, par l'intermédiaire d'un procédé comportant un prétraitement d'un déchet comprenant des REI par une faible quantité de poudre de ciment, afin de neutraliser les radionucléides retenus par ces résines.

Cette poudre de ciment est alors utilisée en mélange avec des particules de dioxyde de silicium cristallin, ces dernières permettant de réduire l'échauffement généré au sein de la pâte cimentaire obtenue par hydratation de la poudre de ciment et, partant, d'améliorer la cohésion et la durée de vie du colis.

En outre, elle permet de réaliser un colis de conditionnement d'un volume relativement important, typiquement de 1100 litres, ce volume étant inédit, en l'état actuel des connaissances des inventeurs, dans le domaine du conditionnement des déchets radioactifs.

D'autres caractéristiques et avantages de l'invention ressortiront du complément de description qui suit, qui se rapporte à une étude des propriétés de réduction de l'échauffement de la pâte cimentaire résultant de l'hydratation de la poudre de ciment, par essais de calorimétrie normalisés et modélisation thermique, ainsi qu'à un exemple de mise en oeuvre du procédé et à un exemple de réalisation d'un colis de conditionnement selon l'invention, ce complément de description se référant aux figures annexées.

Il va de soi que ces exemples ne sont donnés qu'à titre d'illustrations des objets de l'invention et ne constituent en aucun cas une limitation de ces objets.

### BRÈVE DESCRIPTION DES FIGURES

La Figure 1 est une représentation du dispositif utilisé pour les essais de calorimétrie effectués selon la norme NF P 15-436.
La Figure 2 représente l'évolution comparative des températures, notées T, mesurées à l'intérieur d'un calorimètre utilisé lors des essais normalisés en fonction du temps, noté t, pour des formulations telles que celle mise en oeuvre dans le procédé ACR et celle conforme à l'invention.
La Figure 3 représente une modélisation comparative des températures, notées T, au sein d'une formulation comportant un déchet uniquement composé de fines de dissolution, en fonction du temps, noté t, en divers points de cette formulation.
La Figure 4 illustre l'analyse granulométrique de la composition comportant de la silice cristalline telle qu'utilisée dans le mode particulier de réalisation d'une formulation selon l'invention, par représentation du refus cumulé, noté RC, en fonction de l'ouverture, notée ∅.

### EXPOSÉ DÉTAILLÉ DU MODE DE RÉALISATION PARTICULIER

### Section liminaire : Mesures de calorimétrie et modélisation thermique de l'échauffement durant l'hydratation d'un ciment CEM III/C

Une étude préparatoire, ayant pour objectif la détermination du comportement thermique d'une poudre de ciment CEM III/C lors de son hydratation, a été menée.

Cette étude préparatoire fait intervenir :
- dans un premier temps, des mesures par calorimétrie de Langavant, qui sont normalisées et ainsi réalisées à une température de fonctionnement de référence ;
- dans un deuxième temps, une modélisation thermique assistée par ordinateur à partir des résultats obtenus lors de ces mesures, afin de déterminer le comportement thermique de ce ciment à des températures de fonctionnement différentes.

### 1. Mesures de calorimétrie

### 1.1. Principe de la méthode

La méthode mise en oeuvre en premier lieu dans cette étude, régie par la norme NF P 15-436, permet de mesurer la chaleur d'hydratation de poudres de ciment par calorimétrie semi-adiabatique.

Cette méthode est encore appelée « méthode du calorimètre de Langavant ».

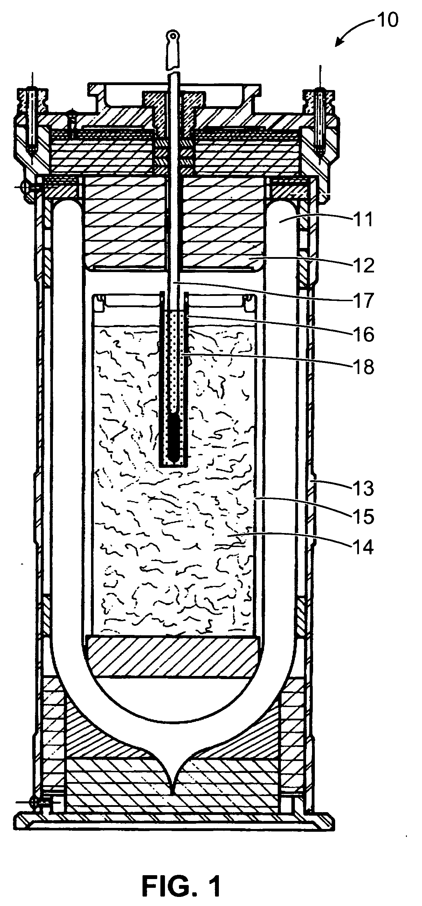

Les mesures sont réalisées à l'aide d'un calorimètre de Langavant, tel qu'illustré sur la Figure 1. Ce dernier se présente sous la forme d'un dispositif 10 composé d'un vase de Dewar 11 fermé par un bouchon calorifugé 12 et contenu dans une enveloppe rigide 13.

La méthode mentionnée ci-dessus consiste à effectuer un prélèvement 14 d'une formulation telle que celle de l'invention, juste après la gâchée.

Ce prélèvement 14 est introduit dans une boîte cylindrique 15 refermée de manière étanche et munie d'un doigt de gant 16 permettant l'introduction d'un dispositif 17 permettant le suivi de la température, par exemple un thermomètre ou un thermocouple.

Un liquide caloporteur 18, par exemple de l'huile, est introduit préalablement à l'intérieur de ce doigt de gant, dans le but d'améliorer le transfert thermique vers le thermocouple. L'ensemble est déposé dans le calorimètre 10.

Deux principes sont mis en oeuvre dans cette méthode.

En effet, l'évolution de la température à l'intérieur de la boîte 15 permet d'évaluer la quantité de chaleur dégagée.

En outre, à une échéance donnée, la chaleur d'hydratation de la poudre de ciment contenue dans le prélèvement 14 est égale à la somme de la chaleur accumulée dans le vase de Dewar 11, et de la chaleur dissipée vers le milieu ambiant depuis l'instant initial.

### 1.2. Essai comparatif de la formulation ACR et de celle conforme à l'invention

Une étude comparative est réalisée afin d'étudier les échauffements de la formulation mise en oeuvre dans le procédé ACR et de celle conforme à l'invention, lors de l'hydratation des poudres de ciment CEM III/C contenues dans chacune de ces formulations.

La composition massique de ces formulations est consignée dans le Tableau 1.

**TABLEAU 1**

| | **Formulation ACR** | **Formulation invention** |
|---|---|---|
| | **% massique** | **% massique** |
| Déchet sec | 9,5 | 11,0 |
| Eau | 32,5 | 35,5 |
| Ca(NO₃)₂·4H₂O | 4,2 | - |
| Ca(OH)₂ | 2,8 | - |
| SiO₂ cristallin | - | 9,5 |
| CEM III/C | 51,0 | 44,0 |
| Fluidifiant | oui | oui |

Les essais sont réalisés dans un calorimètre placé dans un environnement de température 20°C constante (thermostat), en effectuant un prélèvement de chacune des formulations évaluées, ces dernières étant préparées dans deux fûts d'une contenance de 200 litres chacun.

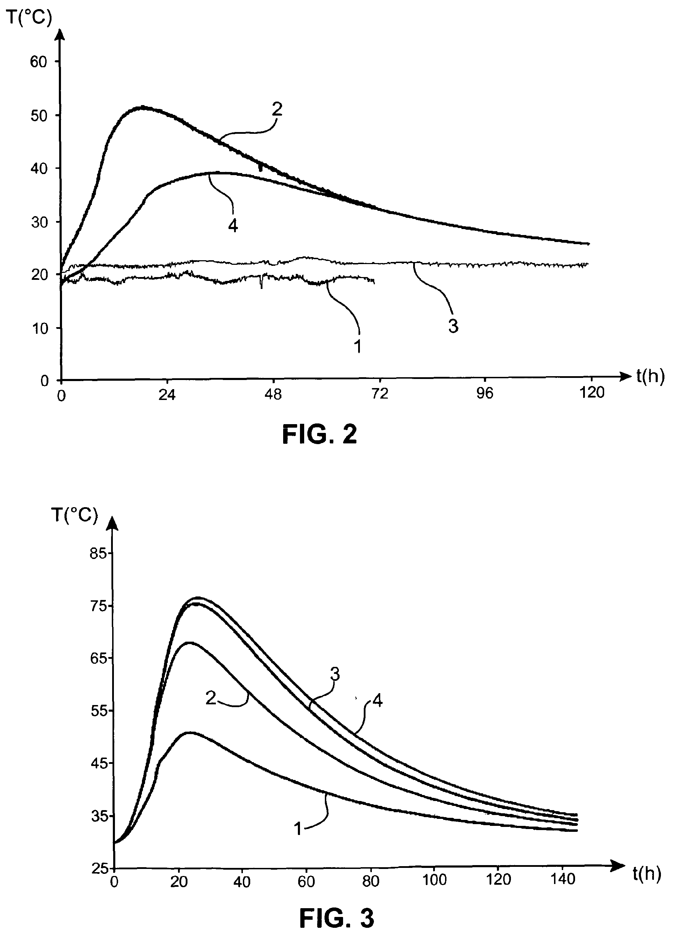

La Figure 2 présente l'évolution de la température à l'intérieur du calorimètre en fonction du temps, pour chacune des formulations évaluées.

Sur cette figure, les courbes 1 et 3 traduisent l'évolution de la température de l'environnement dans lequel le calorimètre est placé, cette température restant sensiblement égale à 20°C durant toute la durée des mesures.

Les courbes 2 et 4 représentent, quant à elles, l'évolution de la température à l'intérieur des boîtes de mesure déposées dans le calorimètre, respectivement pour la formulation ACR et celle conforme à l'invention.

Une nette diminution de l'échauffement peut être notée par utilisation d'une formulation conforme à l'invention. En effet, la température maximale atteinte au sein de cette formulation est inférieure à 40°C (courbe 4), alors que celle atteinte au sein de la formulation ACR dépasse légèrement 50°C (courbe 2).

### 2. Modélisation thermique

La deuxième étape préparatoire consiste en une modélisation se fondant sur les résultats obtenus lors des essais calorimétriques normalisés précédemment explicités réalisés dans un environnement où la température est stabilisée à une température de fonctionnement de référence (20°C) par thermostat.

Ceci permet de déterminer le comportement thermique de la formulation selon l'invention lors de l'hydratation de la poudre de ciment, et ce, à des températures de fonctionnement différentes de cette température de fonctionnement de référence, mais également en présence de volumes d'enrobé différents.

### 2.1. Méthodologie suivie

La méthode retenue repose sur l'exploitation d'un modèle de connaissance des transferts thermiques, développé à l'aide de la version 2006.5 du solveur algébro-différentiel Aspen Custom Modeler™.

Ce modèle représente le comportement thermique transitoire d'une formulation selon l'invention, lors de l'hydratation de la poudre de ciment, au sein d'un fût dans lequel l'enrobé est constitué.

La démarche retenue repose sur les étapes suivantes :
- estimation de la loi d'évolution de la chaleur d'hydratation massique des poudres de ciment au cours de la réaction d'hydratation de celles-ci, sur la base des essais calorimétriques explicités plus haut, à une température stabilisée à 20°C par thermostat ;
- implémentation de la loi d'évolution de la chaleur d'hydratation massique de ces poudres de ciment dans le modèle, pour le comportement thermique transitoire de la formulation selon l'invention lors de l'hydratation de la poudre de ciment ;
- validation du modèle par comparaison avec les données expérimentales obtenues sur les fûts de 200 litres et 1100 litres à une température stabilisée à 20°C par thermostat ; et
- extrapolation à un fût de 1100 litres, ce fût étant placé dans un environnement où la température est stabilisée à 30°C, et comparaison à un critère thermique, selon lequel il est d'usage de considérer qu'aucun dommage n'affecte l'enrobé lorsque la température maximale atteinte lors de la fabrication de cet enrobé est inférieure à 80°C.

Les phénomènes physiques pris en compte pour la modélisation sont les suivants :
- la conduction thermique : radiale et verticale dans le ciment, radiale dans la paroi du fût ;
- le dégagement thermique dû à la chaleur d'hydratation du ciment ;
- le rayonnement : entre la paroi latérale externe du fût et l'environnement extérieur, mais également entre la surface supérieure du ciment et l'environnement extérieur ; et
- la convection naturelle : entre la paroi latérale externe du fût et l'air ambiant, mais également entre la surface supérieure du ciment et l'air ambiant.

### 2.2. Résultats de la modélisation

La démarche suivie dans la modélisation a pour objectif de simuler le comportement thermique de la formulation selon l'invention lors de l'hydratation de la poudre de ciment, cette formulation étant contenue dans un fût de 1100 litres, lui-même placé dans un environnement où la température est stabilisée à 30°C.

Une différence est toutefois à noter, selon laquelle le déchet pris en compte dans cette modélisation est exclusivement constitué de fines de dissolution, celles-ci ayant été identifiées par les inventeurs comme le constituant du déchet radioactif réellement utilisé le plus pénalisant en termes d'échauffement, préalablement à cette modélisation.

Ainsi, il a été obtenu une modélisation de l'évolution de la température en quatre points de la formulation comportant un déchet uniquement composé de fines de dissolution, en fonction du temps, une représentation graphique de cette évolution étant présentée à la Figure 3.

Les températures de surface et de bord maximales estimées sont respectivement comprises entre 50 et 55°C (courbe 1), et entre 65 et 70°C (courbe 2). Cette même modélisation fait apparaître des températures de coeur et de fond maximales toutes deux légèrement supérieures à 75°C (courbes 3 et 4).

Selon les résultats de cette modélisation, le critère thermique énoncé au paragraphe 2.1. est respecté.

### Exemple : Procédé de conditionnement d'un déchet radioactif et colis de conditionnement

Cet exemple présente le mode de mise en oeuvre particulier d'un procédé de conditionnement d'un déchet radioactif par cimentation selon l'invention, ainsi que le mode de réalisation d'un colis de conditionnement selon l'invention.

### 1. Composition du déchet radioactif

Le Tableau 2 présente la répartition moyenne des constituants d'un déchet radioactif de référence, qui est utilisé dans une formulation conforme à l'invention, en fonction de la nature des constituants et de la taille des particules composant chacun de ces constituants.

**TABLEAU 2**

| **Constituant** | **Taille de particules (µm)** | **% massique** |
|---|---|---|
| REI | 5 - 130 | 81,3 |
| Fines de cisaillage | 45 - 90 | 1,2 |
| | 200 - 300 | 0,4 |
| | 500 - 1000 | 0,1 |
| | > 1 000 | 0,2 |
| Fines de dissolution | < 20 | 5,3 |
| | 60 - 80 | 4,6 |
| | 170 - 210 | 6,9 |

Ce déchet de référence est constitué de 81,3% en masse de résines échangeuses d'ions (REI), de 1,9% en masse de fines de cisaillage, ainsi que de 16,8% en masse de fines de dissolution.

### 2. Procédé de conditionnement du déchet radioactif par cimentation

Le mode de mise en oeuvre du procédé conforme à l'invention, qui est décrit ci-après, fait intervenir une formulation telle que celle décrite au paragraphe 1 de cet exemple, comprenant un déchet dans lequel les REI apportent une quantité d'eau suffisante pour assurer l'hydratation de la poudre de ciment.

Les compositions massiques du déchet d'une part, de la matrice cimentaire d'autre part, sont respectivement présentées dans les Tableaux 3 et 4 ci-après.

**TABLEAU 3**

| **Constituant** | **Taille de particules (µm)** | **Masse (kg)** |
|---|---|---|
| REI | 5 - 130 | 147,5 |
| Fines de cisaillage | 45 - 90 | 2,2 |
| | 200 - 300 | 0,7 |
| | 500 - 1 000 | 0,2 |
| | > 1 000 | 0,4 |
| Fines de dissolution | < 20 | 9,6 |
| | 60 - 80 | 8,3 |
| | 170 - 210 | 12,5 |

**TABLEAU 4**

| **Constituant** | **Masse (kg)** |
|---|---|
| Eau apportée par le déchet | 585,8 |
| Ciment CEM III/C | 726,0 |
| Composition comportant du SiO₂ cristallin | 156,8 |

La matrice cimentaire comporte de l'eau, une poudre de ciment CEM III/C, commercialisée par la société Calcia, et une composition, commercialisée sous la référence qualitative Millisil C6 par la société Sibelco, comportant un dioxyde de silicium sous forme cristalline en un pourcentage massique typiquement supérieur à 98,6%.

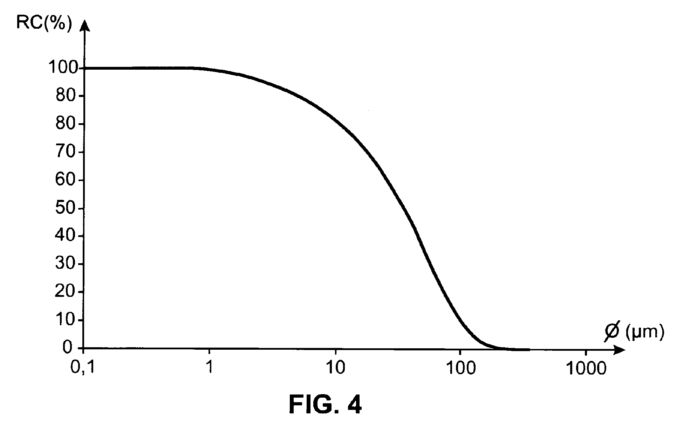

L'analyse granulométrique de cette composition du dioxyde de silicium, qui est réalisée par granulométrie laser réalisée à l'aide d'un appareil Mastersizer 2000 (société Malvern), est représentée à la Figure 4.

Comme il peut être déterminé par lecture des données de la Figure 4, 10% ; 17,5% ; 50% et 90% en nombre des particules de la composition possèdent respectivement des tailles supérieures à 100,7 ; 90 ; 35,6 et 5,4 µm.

Les composants de cette formulation sont placés dans un fût, celui-ci étant également destiné au conditionnement de l'enrobé obtenu par mise en oeuvre du procédé selon l'invention.

Le Tableau 5 présente les dimensions d'un fût de conditionnement du déchet radioactif, dont la composition vient d'être précisée, ainsi que les paramètres relatifs au remplissage maximal de ce fût. Les parois du fût possèdent, en outre, une épaisseur de 3 millimètres.

**TABLEAU 5**

| | **Diamètre (mm)** | **Hauteur (mm)** | **Volume (L)** |
|---|---|---|---|
| Volume utile | 1024 | 1469 | 1210 |
| Remplissage maximal | 1024 | 1336 | 1100 |

Un dispositif d'agitation mécanique, comportant un axe d'entraînement auquel un ensemble de pales est fixé, est destiné à assurer l'homogénéisation tout au long de la mise en oeuvre du procédé selon l'invention.

Selon le mode de mise en oeuvre ici décrit, le procédé est réalisé à pale perdue. En complément, il est précisé que les pales du dispositif d'agitation mécanique et le fût sont fabriqués en acier noir.

Une description détaillée du mode de mise en oeuvre du procédé selon l'invention figure ci-après.

Dans un premier temps, 767,2 kg de déchet humide, dont 181,4 kg de déchet (masse sèche) et 585,8 kg d'eau retenue en partie par les REI comprises dans ce déchet, sont progressivement introduits dans le fût sous malaxage à une vitesse de 40 tours par minute (tr/min).

Après homogénéisation pendant une durée comprise entre 10 et 20 minutes, 20% en masse de la poudre de ciment, soit 145,2 kg, et 20% en masse de la composition de SiO₂, soit 31,4 kg, sont ajoutés en même temps au contenu du fût sous un débit d'environ 1400 kg/h et sous malaxage à une vitesse de 40 tr/min.

À l'issue d'une période de 30 minutes d'agitation, les fractions restantes de poudre de ciment et de composition de SiO₂, ces fractions ayant une masse totale de 706,2 kg, sont ajoutées au contenu du fût sous un gradient négatif de débit, allant de 1 100 à 900 kg/h suivant les contraintes mécaniques exercées sur la pale par la formulation ainsi constituée, et sous malaxage à une vitesse de 40 tr/min.

De manière éventuelle, il est procédé, dans le même temps, à l'ajout d'un ou plusieurs adjuvants, par exemple un agent fluidifiant, dont le volume ajouté est déterminé en fonction de la rhéologie de la formulation obtenue.

Un tel agent fluidifiant est, par exemple, celui commercialisé sous la référence Pozzolith™ 400 N par la société BASF. Celui-ci est introduit de manière progressive, par quantités d'un litre, dans la limite de 5% de la masse totale de poudre de ciment engagée, soit 36,3 kg.

Une fois la totalité de la formulation introduite dans le fût, celle-ci est homogénéisée durant 10 minutes, sous malaxage à une vitesse de 50 tr/min.

Après désolidarisation des pales du dispositif d'agitation mécanique, le fût est entreposé à température ambiante pour durcissement de l'enrobé ainsi constitué.

### 3. Colis de conditionnement obtenu

La mise en oeuvre du procédé selon l'invention permet la constitution d'un colis de conditionnement, ce dernier étant formé d'un fût de conditionnement et d'un enrobé, tels que décrits de manière détaillée au paragraphe 2 de cet exemple.

La composition massique de la formulation confinée au sein du colis qui est obtenu est présentée dans le Tableau 6.

**TABLEAU 6**

| | **% massique** |
|---|---|
| Déchet (masse sèche) | 9,9 |
| Eau | 32,0 |
| CEM III/C | 39,6 |
| Composition de SiO₂ | 8,5 |

Afin de décrire le colis de conditionnement de manière exhaustive, il est à ajouter, aux données du Tableau 6, les précisions suivantes :
- ces données ne prennent pas en compte l'agent fluidifiant qui est éventuellement ajouté, et qui est introduit, dans l'affirmative, en une quantité ne dépassant pas 5% de la masse totale de poudre de ciment engagée, soit 36,3 kg (cf. paragraphe 2 de l'exemple), en rappelant que cet agent fluidifiant ne modifie pas la teneur en eau du milieu dans lequel il est introduit ;
- la formulation possède un rapport massique de l'eau à la poudre de ciment valant 0,81 ;
- le taux de déchet sec contenu dans le colis de conditionnement conforme à l'invention, est égal à 23,7%. Ce taux est défini comme étant le rapport de la masse d'un extrait sec, obtenu par chauffage d'un prélèvement de déchet représentatif du déchet global, à une température de 65°C jusqu'à stabilisation de la masse, à la masse du prélèvement avant chauffage ; et
- le volume maximal de remplissage du fût employé dans le colis de conditionnement selon l'invention est de 1100 litres, comme il a été précisé dans le Tableau 5.

### RÉFÉRENCES CITÉES

[1] Demande de brevet EP 0 319 398.
[2] Brevet US 4,904,416.

## Revendications

1. Utilisation d'un dioxyde de silicium sous une forme cristalline, se présentant sous la forme de particules dont au moins 90% en nombre possèdent une taille moyenne de particules allant de 0,5 à 200 µm, en mélange avec une poudre de ciment, pour diminuer l'échauffement de la pâte cimentaire résultant de l'hydratation de cette poudre, au cours d'un processus de conditionnement d'un déchet radioactif par cimentation.

2. Utilisation selon la revendication 1, dans laquelle au moins 90% en nombre des particules du dioxyde de silicium possèdent une taille moyenne de particules allant de 1 à 100 µm.

3. Utilisation selon la revendication 1 ou la revendication 2, dans laquelle le dioxyde de silicium et la poudre de ciment sont présents, dans le mélange, en des proportions massiques respectives de (17 ± 3)% et (83 ± 3)% de la masse totale de ce mélange.

4. Utilisation selon l'une quelconque des revendications précédentes, dans laquelle le dioxyde de silicium est du quartz.

5. Formulation pour le conditionnement d'un déchet radioactif par cimentation, qui comprend les composants suivants :
- (11,0 ± 3,3)% en masse sèche du déchet radioactif ;
- (35,5 ± 4,0)% en masse d'eau ;
- (44,0 ± 5,0)% en masse d'une poudre de ciment ;
- (9,5 ± 3,1)% en masse d'un dioxyde de silicium sous une forme cristalline, se présentant sous la forme de particules dont au moins 90% en nombre possèdent une taille moyenne de particules allant de 0,5 à 200 µm.

6. Formulation selon la revendication 5, dans laquelle le déchet radioactif est choisi parmi des résines échangeuses d'ions, des fines de cisaillage, des fines de dissolution et les mélanges de celles-ci.

7. Formulation selon la revendication 5 ou la revendication 6, dans laquelle le ciment est un ciment de haut fourneau et, mieux encore, un ciment de haut fourneau de classe C.

8. Formulation selon l'une quelconque des revendications 5 à 7, dans laquelle le dioxyde de silicium est du quartz.

9. Formulation selon l'une quelconque des revendications 5 à 8, qui comprend de plus un agent fluidifiant.

10. Formulation selon la revendication 9, dans laquelle l'agent fluidifiant ne représente pas plus de 5% en masse de la masse de la poudre de ciment.

11. Procédé de conditionnement d'un déchet radioactif par cimentation, qui comprend :
a) le malaxage, dans un contenant, des composants d'une formulation telle que définie dans l'une quelconque des revendications 5 à 10 jusqu'à l'obtention d'un mélange homogène ; et
b) le durcissement du mélange obtenu à l'étape a).

12. Procédé selon la revendication 11, dans lequel l'étape a) comprend :
a₁) le prétraitement du déchet radioactif par malaxage de ce déchet sous forme humide, avec une fraction de la poudre de ciment et une fraction du dioxyde de silicium ; et
a₂) le malaxage du déchet radioactif ainsi prétraité avec les fractions restantes de poudre de ciment et de dioxyde de silicium.

13. Procédé selon la revendication 12, dans lequel une fraction massique de (20 ± 5)% de la masse totale de la poudre de ciment, et une fraction massique de (20 ± 5)% de la masse totale du dioxyde de silicium sont utilisées à l'étape a₁).

14. Procédé selon la revendication 12 ou la revendication 13, dans lequel la formulation comprend un agent fluidifiant et cet agent fluidifiant est ajouté au mélange obtenu à l'étape a₂).

15. Procédé selon l'une quelconque des revendications 11 à 14, qui est un procédé à pale perdue.

16. Procédé selon l'une quelconque des revendications 11 à 15, dans lequel le contenant sert également de fût de conditionnement du déchet radioactif.

17. Colis de conditionnement d'un déchet radioactif, qui est obtenu par un procédé tel que défini dans la revendication 16.

18. Colis selon la revendication 17, qui présente un volume supérieur à 500 litres et, mieux encore de 1000 à 1 200 litres.

## Patentansprüche

1. Verwendung eines Silicium-Dioxids in kristalliner Form, das die Form von Partikeln aufweist, von denen wenigstens 90 Anzahl-Prozent eine mittlere Partikelgröße besitzen, die von 0,5 bis 200 µm reicht, in Mischung mit einem Zementpulver, um die aus der Hydratation dieses Pulvers resultierende Erwärmung der Zementpaste zu verringern, im Verlauf eines Verfahrens zum Verpacken eines radioaktiven Abfalls durch Zementierung.

2. Verwendung nach Anspruch 1, bei der wenigstens 90 Anzahl-Prozent der Partikel des Silicium-Dioxids eine mittlere Partikelgröße besitzen, die von 1 bis 100 µm reicht.

3. Verwendung nach Anspruch 1 oder Anspruch 2, bei der das Silicium-Dioxid und das Zementpulver in der Mischung in Massenanteilen von (17±3)% und (83±3)% der gesamten Masse dieser Mischung vorhanden sind.

4. Verwendung nach einem der vorhergehenden Ansprüche, bei der das Silicium-Dioxid Quarz ist.

5. Formulierung für die Verpackung eines radioaktiven Abfalls durch Zementierung, die die folgenden Bestandteile enthält:
- (11,0±3,3) Trockenmasse-Prozent des radioaktiven Abfalls;
- (35,5±4,0) Masse-Prozent Wasser;
- (44,0±5,0) Masse-Prozent eines Zementpulvers;
- (9,5±3,1) Masse-Prozent eines Silicium-Dioxids in kristalliner Form, das die Form von Partikeln aufweist, von denen wenigstens 90 Anzahl-Prozent eine mittlere Partikelgröße besitzen, die von 0,5 bis 200 µm reicht.

6. Formulierung nach Anspruch 5, bei der der radioaktive Abfall ausgewählt ist aus den lonenaustauschharzen, Schneidkleinresten, Auflösungskleinresten und deren Mischungen.

7. Formulierung nach Anspruch 5 oder Anspruch 6, bei der der Zement ein Hochofenzement ist, und vorzugsweise ein Hochofenzement der Klasse C.

8. Formulierung nach einem der Ansprüche 5 bis 7, bei der das Silicium-Dioxid Quarz ist.

9. Formulierung nach einem der Ansprüche 5 bis 8, die ferner ein Verflüssigungsagenz enthält.

10. Formulierung nach Anspruch 9, bei der das Verflüssigungsagenz nicht mehr als 5 Masse-Prozent der Masse des Zementpulvers repräsentiert.

11. Verfahren zum Verpacken eines radioaktiven Abfalls durch Zementierung, das umfasst:
a) das Rühren der Bestandteile einer Formulierung wie in einem der Ansprüche 5 bis 10 definiert in einem Behälter, bis eine homogene Mischung erhalten wird; und
b) das Aushärten der im Schritt a) erhaltenen Mischung.

12. Verfahren nach Anspruch 11, bei dem der Schritt a) umfasst:
a₁) das Vorbehandeln des radioaktiven Abfalls durch Rühren dieses Abfalls in feuchter Form mit einem Teil des Zementpulvers und einem Teil des Silicium-Dioxids; und
a₂) das Verrühren des derart vorbehandelten radioaktiven Abfalls mit den verbleibenden Teilen von Zementpulver und von Silicium-Dioxid.

13. Verfahren nach Anspruch 12, bei dem ein Massenteil von (20±5)% der Gesamtmasse des Zementpulvers und ein Masseteil von (20±5)% der Gesamtmasse des Silicium-Dioxids im Schritt a₁) verwendet werden.

14. Verfahren nach Anspruch 12 oder Anspruch 13, bei dem die Formulierung ein Verflüssigungsagenz enthält, und dieses Verflüssigungsagenz zu der im Schritt a₂) erhaltenen Mischung hinzugefügt wird.

15. Verfahren nach einem der Ansprüche 11 bis 14, das ein Lost-Paddle-Verfahren ist.

16. Verfahren nach einem der Ansprüche 11 bis 15, bei dem der Behälter ebenfalls als Verpackungsfass für den radioaktiven Abfall dient.

17. Paket zum Verpacken eines radioaktiven Abfalls, das mittels eines Verfahrens wie in Anspruch 16 definiert erhalten ist.

18. Paket nach Anspruch 17, das ein Volumen von mehr als 500 Liter, und vorzugsweise von 1000 bis 1200 Litern aufweist.

## Claims

1. Use of silicon dioxide in crystalline form, which takes the form of particles, at least 90% by number of which have an average particle size ranging from 0.5 to 200 µm, mixed with cement powder, to reduce the heating of the cement paste caused by the hydration of said powder, during a process of packaging of radioactive waste by cementing.

2. Use according to claim 1, wherein at least 90% by number of the particles of silicon dioxide have an average particle size ranging from 1 to 100 µm.

3. Use according to claim 1 or claim 2, wherein the silicon dioxide and the cement powder are present, in the mixture, in respective mass proportions of (17 ± 3)% and (83 ± 3)% of the total mass of said mixture.

4. Use according to any of the preceding claims, wherein the silicon dioxide is quartz.

5. Formulation for the packaging of radioactive waste by cementing, which comprises the following components:
- (11.0 ± 3.3)% by dry mass of radioactive waste;
- (35.5 ± 4.0)% by mass of water;
- (44.0 ± 5.0)% by mass of cement powder;
- (9.5 ± 3.1)% by mass of silicon dioxide in crystalline form, which takes the form of particles, at least 90% by number of which have an average particle size ranging from 0.5 to 200 µm.

6. Formulation according to claim 5, wherein the radioactive waste is selected from ion exchange resins, shearing fines, dissolution fines and mixtures thereof.

7. Formulation according to claim 5 or claim 6, wherein the cement is a blast furnace cement and, better still, a class C blast furnace cement.

8. Formulation according to any of claims 5 to 7, wherein the silicon dioxide is quartz.

9. Formulation according to any of claims 5 to 8, which comprises in addition a fluidizing agent.

10. Formulation according to claim 9, wherein the fluidizing agent does not represent more than 5% by mass of the mass of cement powder.

11. Method of packaging radioactive waste by cementing, which comprises:
a) mixing, in a container, the components of a formulation as defined in any of claims 5 to 10 until a homogenous mixture is obtained; and
b) hardening the mixture obtained at step a).

12. Method according to claim 11, in which step a) comprises:
a₁) pre-processing the radioactive waste by mixing said waste in humid form, with a fraction of the cement powder and a fraction of the silicon dioxide; and
a₂) mixing the radioactive waste thereby pre-processed with the remaining fractions of cement powder and silicon dioxide.

13. Method according to claim 12, in which a mass fraction of (20 ± 5)% of the total mass of cement powder, and a mass fraction of (20 ± 5)% of the total mass of silicon dioxide are used at step a₁).

14. Method according to claim 12 or claim 13, in which the formulation comprises a fluidizing agent and said fluidizing agent is added to the mixture obtained at step a₂).

15. Method according to any of claims 11 to 14, which is a lost paddle method.

16. Method according to any of claims 11 to 15, in which the container also serves as drum for packaging of the radioactive waste.

17. Package for packaging of radioactive waste, which is obtained by a method as defined in claim 16.

18. Package according to claim 17, which has a volume above 500 litres and, better still, from 1000 to 1200 litres.
